# EUROPEAN PATENT SPECIFICATION

(11) **EP 1 334 075 B1**
(45) Date of publication and mention of the grant of the patent: **28.12.2005**
(21) Application number: 00972735.5
(22) Date of filing: 11.10.2000
(51) Int. Cl.: C02F 3/12, C02F 3/30, C02F 3/10

(54) **METHOD AND APPARATUS FOR BIOLOGICAL WASTEWATER TREATMENT**
VERFAHREN UND VORRICHTUNG ZUR BIOLOGISCHEN ABWASSERBEHANDLUNG
PROCEDE ET APPAREIL POUR LE TRAITEMENT BIOLOGIQUE D'EAUX USEES

(43) Date of publication of application: 13.08.2003
(73) Proprietor: Envitec S.A., 152 33 Chalandri (GR); Ritt, Roswitha, 81669 München (DE)
(72) Inventor: ZEMLYAK, Mykhaylo Michailovich, Kiev, 03150 (UA)
(74) Representative: Beyer, Andreas
(86) International application number: PCT/EP2000/010013
(87) International publication number: WO 2002/030833

(56) References cited:
- US-A- 5 766 459
- US-A- 5 954 953
- PATENT ABSTRACTS OF JAPAN vol. 010, no. 013 (C-323), 18 January 1986 (1986-01-18) & JP 60 168594 A (KURITA KOGYO KK), 2 September 1985 (1985-09-02)

## Description

The invention relates to a method and an apparatus for biological wastewater treatment.

Biological wastewater treatment, in particular the removal of organic and phosphorous pollutants as well as nitrogen containing compounds from municipal and industrial wastewater, by microorganisms is a well known method commonly used in wastewater treatment plants. Typically, the wastewater is mixed with a so-called activated sludge on which special types of bacteria are cultivated. These microorgansims are able to decompose the pollutants present in the wastewater and convert them into biomass. While organic pollutants under aerobic conditions can easily be decomposed by heterotropic bacteria, the removal of nitrogen containing pollutants requires a two step process. In a first step, the nitrification step, nitrogen containing compounds are oxidized under aerobic conditions by autotropic bacteria to form nitrites and nitrates. In a second step, the denitrification step, nitrites and nitrates are reduced to form molecular nitrogen. To achieve an efficient denitrification, low contents of dissolved oxygen within the sludge/wastewater mixture and the presence of bacteria consuming the oxygen bonded to the nitrates and nitrites are necessary. Thus, the decomposition of organic pollutants and the nitrification of nitrogen containing compounds require aerobic conditions, while denitrification may only be achieved under anoxic conditions.

In the prior art these requirements are met by introducing the wastewater into a first tank where it is mixed with activated sludge containing heterotropic and autotropic bacteria. To provide the required aerobic conditions for decomposition of organic pollutants and nitrification of nitrogen containing compounds the mixture is intensively aerated. Afterwards the wastewater is passed into a second tank held under anoxic conditions wherein the denitrification takes place.

Therefore, biological wastewater treatment according to the prior art requires a long retention time of the wastewater within the bioreactor thus limiting the economic efficiency of the method. Furthermore, providing separated tanks held under aerobic and anoxic conditions, respectively, requires large volume apparatuses causing high costs of construction and high running costs.

JP-60 168 594 A discloses a method and an apparatus for the removal of organic substances from a raw solution such as wastewater. In an aeration zone of the apparatus the raw solution is mixed with an activated sludge in a liquid mixture zone and the mixture of raw solution and activated sludge then rises through a rising zone, wherein the decomposition of organic substances is performed during rising by the oxygen contained in the air blown into the mixture. In an upper part of the liquid mixture zone the mixture of raw solution and activated sludge is separated from air and then falls through a falling zone. From the falling zone a part of the mixture of raw solution and activated sludge rises through a solid-liquid separation zone, wherein the clarified raw solution is collected from the surface of the solid-liquid separation zone and the sludge is concentrated in a waste sludge pit provided at the bottom of the apparatus. The greater part of the mixture of raw solution and activated sludge exiting the falling zone is, however, recirculated from a lower part of the solid-liquid separation zone to the liquid mixture zone along a distribution plate and again receives aeration.

The object of the invention is to provide a method and an apparatus for more effective and cost saving biological wastewater treatment.

This object is accomplished by a method and an apparatus comprising the features of claims 1 and 11, respectively.

The method for biological wastewater treatment according to the present invention, in particular for the removal for organic and phosphorus pollutants as well as nitrogen containing compounds from wastewater, by micro-organisms contained within an activated sludge comprises mixing the activated sludge with wastewater and aerating the mixture in an aeration zone. Thereby the sludge/wastewater mixture is enriched with dissolved oxygen creating aerobic conditions required for an effective decomposition of organic and nitrification of nitrogen containing pollutants. In a degassing zone the amount of dissolved oxygen present in the sludge/wastewater mixture after aeration is then significantly reduced by microorganisms decomposing organic pollutants and nitrificating nitrogen containing compounds. Microorganisms in addition to those which are already present in the sludge/wastewater mixture are cultivated an the surface of a non-reactive carrier medium within the degassing zone. Thereby a high concentration of biomass is provided within said degassing zone. As a result an effective decomposition of organic pollutants and nitrification of nitrogen containing compounds is achieved while the oxygen content of the mixture is significantly reduced. From the degassing zone the mixture is passed into at least one denitrification vortex zone containing activated sludge in pseudo suspended form. The term "vortex zone" means that a zone is provided, in which there is a vortex, swirl or eddy kind of movement producing a vortex action which serves to keep the particles of the activated sludge colloidally suspended within the "vortex zone" of wastewater. The term "pseudo suspended" means that the suspension of activated sludge and wastewater is not self-maintaining, but needs the constant vortex action present in the vortex zone to keep the sludge particles suspended.

As a result of the intensive consumption of dissolved oxygen in the degassing zone the oxygen content of the sludge/wastewater mixture within the at least one denitrification vortex zone is kept low enough to allow an effective denitrification. The oxygen bonded to the nitrates and nitrites formed under aerobic conditions in the aeration and the degassing zone is consumed by microorganisms which are present in the pseudo suspended activated sludge and which decompose residual organic pollutants. Since the contact area between the particles of the activated sludge and the wastewater in the pseudo suspension is maximized, ideal conditions prevail within the pseudo suspension for the interaction between the bacteria contained in the activated sludge and the pollutants present in the wastewater. By forming a directed recirculating flow between one zone containing pseudo suspended activated sludge and the aeration zone the effectiveness of the purification process is significantly enhanced. After having been treated as described above the purified wastewater is separated from the sludge.

From the above discussion of the method according to the present invention it is apparent that the purification and the separation process occur simultaneously. As a result, an additional step, e.g. the sedimentation of the activated sludge and the separation of the clarified wastewater from the settled sludge, is not required. The method for biological wastewater treatment according to the invention allows the simultaneous removal of organic and nitrogen containing pollutants in a single continuous process and therefore provides a high economic efficiency.

The non-reactive carrier medium provided within the degassing zone may be a synthetic fibrous grid, in particular consisting of a polyamide. Such a material does not interact with either the bacteria or the pollutants within the wastewater. Other non-reactive carrier materials are also suitable.

According to a preferred embodiment of the invention the concentration of pseudo suspended activated sludge is at least 4.0 g/l. As a result the purification of the wastewater can be achieved with a high degree of effectiveness.

According to still another embodiment of the invention the sludge loading is less than 0.2 g of BOD₅ (Biological Oxygen Demand within 5 days) per g of activated sludge and per day. At these loading values the growth rate of the bacteria and therefore the production of excess sludge is kept at a low level. Furthermore, the quantity of gases, such as CO₂, H₂O, NH₄, etc. produced during the wastewater treatment process is diminished thus keeping the sludge volume index (sludge volume in ml comprising 1 g of dried substance) at low values.

The production of excess sludge may be less than 0.35 g of sludge per g of BOD₅ removed. If only small amounts of excess sludge are produced, it is not necessary to remove large amounts of sludge from the sludge/wastewater mixture. Thereby the retention time of the activated sludge in the mixture can be prolonged.

Preferably the retention time of the activated sludge in the mixture is at least 10 days. Within this period not only the rapidly reproducing heterotropic bacteria but also the slowly reproducing autotropic bacteria can develop within the activated sludge. The presence of heterotropic and autotropic bacteria within the activated sludge is crucial for the simultaneous removal of organic and nitrogen containing pollutants.

The concentration of dissolved oxygen within the aeration zone may be at least 3.0 mg/l. Under these conditions it is not only possible to decompose organic pollutants but also to achieve an effective nitrification of nitrogen containing compounds.

In still another embodiment of the present invention an aluminum compound is added to the activated sludge/wastewater mixture to remove phosphorous pollutants from the wastewater.

Advantageously the aluminum compound is a solution containing 0.9-1.5 mg of net aluminum per mg of phosphorus to be removed from the wastewater. This solution acts as a flocculator, so that adding said solution to the sludge/wastewater mixture lowers the sludge volume index of the activated sludge.

The apparatus for biological wastewater treatment according to the present invention, in particular for the removal of organic and phosphorous pollutants as well as nitrogen containing compounds from wastewater, by micro-organisms within an activated sludge comprises at least one inlet for the wastewater and an aeration chamber with at least one air diffuser. The aeration chamber is separated from at least one clarification chamber by at least one first wall. The at least one clarification chamber includes a degassing zone comprising a non-reactive carrier medium for cultivating additional microorganisms, at least one denitrification vortex zone separated from the degassing zone, and at least one clear water zone, each clear water zone comprising at least one outlet for clarified water. The at least one denitrification vortex zone contains activated sludge in pseudo suspended form. The aeration chamber and the degassing zone of the at least one clarification chamber are connected by a channel. Between one denitrification vortex zone of the at least one clarification chamber and the aeration chamber a recirculation conncection is provided. Said recirculation connection allows the formation of a directed recirculating flow between the vortex zone and the aeration chamber. The apparatus according to the invention is constructed to allow the simultaneous removal of organic and phosphorous pollutants as well as nitrogen containing compounds in only one tank. As a result the costs of construction as well as the running costs of the system are significantly reduced.

In one embodiment of the apparatus a channel for the removal of excess sludge is arranged within the aeration chamber and a pumping means, in particular an airlift pump, removes the excess sludge from the aeration chamber. This arrangement allows the uniform removal of excess sludge which is important to maintain stable hydraulic conditions within the system.

According to another preferred embodiment the recirculation connection between the denitrification vortex zone and the aeration chamber is formed by an opening between the first wall and the bottom of the clarification chamber. The air diffusers are located within the aeration chamber near this opening. This arrangement is in particular advantageous since a blocking of the recirculation path by settled activated sludge can thus be prevented.

The clarification chamber may include subchambers, each subchamber including a clearwater zone having at least one outlet for clarified water and a denitrification vortex zone.

Preferably the clarification chamber includes two subchambers formed by a dividing element which comprises a slanted wall arranged at the lower end of a vertical wall. The slanted wall forms an angle of 135° to 150° in regard to the vertical wall. Such an embodiment of the dividing element allows the removal of gases from in the upper and the lower subchamber resulting from the interaction of the microorganisms with the pollutants in the wastewater.

Another preferred embodiment of the apparatus according to the invention includes a clarification chamber comprising at least two subchambers each subchamber formed by a slanted wall, in particular of conical shape.

In still another embodiment of the apparatus according to the invention the air diffusers are disposed in an upper portion of the aeration chamber, the cross section of said upper portion of the aeration chamber being enlarged in regard to the remainder of the aeration chamber. Disposing the air diffusers in an upper portion of the aeration chamber saves running costs, as then it is not necessary to use high pressure air compressors to achieve sufficient aeartion.

Preferably at least one vertical recirculation pipe is disposed within the aeration chamber so as to form a recirculating flow within the aeration chamber. Thereby an intensive mixing and aeration of the sludge/wastewater mixture can be achieved regardless to the position of the air diffusers.

In another preferred embodiment of the apparatus according to the invention the aeration chamber is arranged within a first tank. Said aeration chamber is connected with the degassing zones of a plurality of clarification chambers arranged within a plurality of tanks by a system of connecting channels. A system of recirculation connections connect the aeration chamber with one denitrifaction vortex zone within each clarification chamber. This embodiment is advantageous if large amounts of wastewater are be treated.

Further characteristics, properties and advantages of the method and the apparatus according to the invention will be explained by means of the following description with reference to the drawings, in which
- Fig. 1: shows a schematic cross-sectional view of a first embodiment of the apparatus according to the invention, wherein a clarification chamber is disposed in the center of the tank,
- Fig. 2: shows a schematic cross-sectional view of a second embodiment of the apparatus according to the invention, wherein an aeration chamber is disposed in the center of the tank,
- Fig. 3: shows a schematic cross-sectional view of a third embodiment of the apparatus according to the invention, wherein a clarification chamber disposed in the center of the tank is divided into two subchambers by a dividing element,
- Fig. 4: shows a schematic cross-sectional view of another embodiment of the apparatus according to the invention, wherein the clarification chamber is divided into two subchambers by a dividing element and the aeration chamber is disposed in the center of the tank,
- Fig. 5a: shows a schematic cross-sectional view of an embodiment of the apparatus according to the invention, wherein a clarification chamber is divided into a plurality of subchambers,
- Fig. 5b: shows a schematic top view of the embodiment depicted in Fig. 5a,
- Fig. 6a: shows a schematic cross-sectional view of a further embodiment of the apparatus according to the invention, wherein an aeration chamber is connected with a plurality of clarification chambers, and
- Fig. 6b: shows a schematic top view of the embodiment depicted in Fig. 6a.

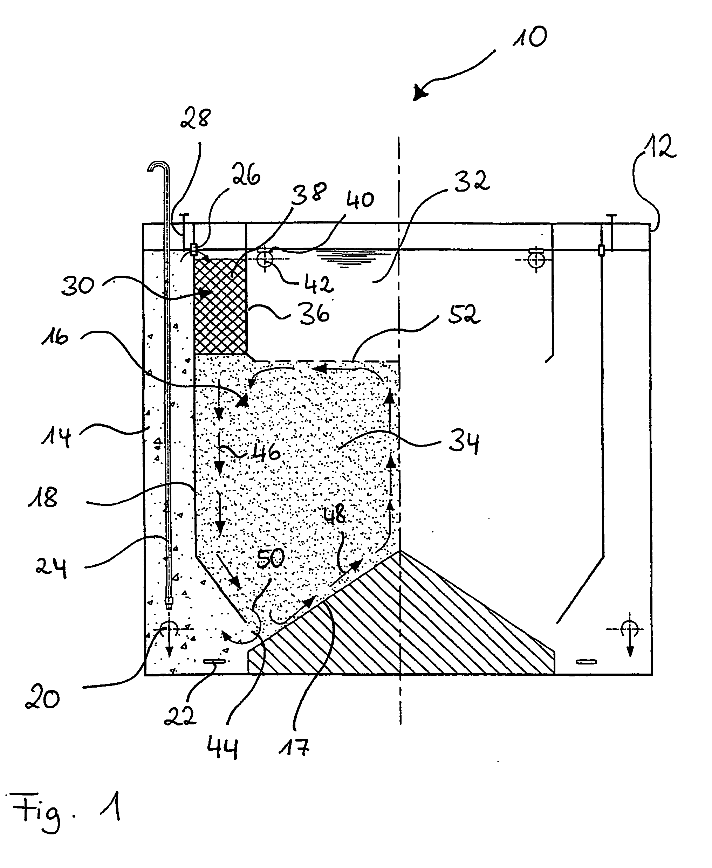

Fig. 1 shows an apparatus for biological wastewater treatment 10 comprising a cylindrical tank 12 including an aeration chamber 14 separated from a clarification chamber 16 disposed in the center of the tank 12 and providing a conically shaped bottom 17 by means of a first wall 18. The bottom of the aeration chamber 14 is arranged below the conically shaped bottom 17 of the clarification chamber 16. The depth of the aeration chamber 14 is 6 m.

Wastewater inlets 20, air diffusers 22 and a channel 24 for the removal of excess sludge are disposed within the aeration chamber 14. A connecting channel 26 provided with a flow regulator 28 connects the aeration chamber 14 with the clarification chamber 16. The clarification chamber 16 includes a degassing zone 30, a clear water zone 32 and a vortex zone 34, the degassing zone 30 being arranged between the aeration chamber 14 and the clear water zone 32. The degassing zone 30 is separated from the clear water zone 32 by a second wall 36.

The degassing zone 30 is provided with a synthetic fibrous grid 38 acting as a non-reactive carrier medium and consisting of a polyamide disposed on a metallic grid. Clear water outlets 40 provided with flow regulating means and connected to a clear water collection pipe 42 are disposed within the clear water zone 32. Between the vortex zone 34 and the aeration chamber 14 a recirculation path 44 is formed by an opening between the first wall 18 and the bottom 17 of the clarification chamber 16.

The wastewater is introduced into the aeration chamber 14 via the wastewater inlets 20 where it is mixed with activated sludge containing heterotropic and autotropic bacteria provided within the tank 12. Since air under pressure is introduced into the aeration chamber 14 by the air diffusers 22 the sludge/wastewater mixture is intensively mixed and enriched with dissolved oxygen. With the depth of the aeration chamber 14 being 6 m, the air diffusion process is highly efficient. The concentration of dissolved oxygen within the aeration chamber 14 is at least 3,0 mg/l. As a result organic pollutants are decomposed by heterotropic bacteria while nitrogen containing compounds are nitrificated to form nitrites and nitrates by autotropic bacteria. Due to the air diffusers 22 being located near the bottom of the aeration chamber 14, an upwardly directed flow of the activated sludge/wastewater mixture forms within the aeration chamber 14.

The mixture is led into the degassing zone 30 via the connecting channel 26, the flow through the connecting channel 26 being regulated by flow regulator 28. Within the degassing zone 30 air bubbles resulting from the intensive mixing and aerating of the sludge/wastewater mixture are removed and the turbulence as well as the momentum of the flow are reduced. Furthermore, heterotropic and autotropic bacteria in addition to those which are already present in the sludge/wastewater mixture are cultivated within the degassing zone 30 on the surface of the synthetic fibrous grid 38. Accordingly a high concentration of microorganisms is provided within said degassing zone 30. These microorganisms are able to decompose large amounts of organic pollutants and nitrificate nitrogen containing compounds present in the wastewater and by doing so consume oxygen. Thus, the content of dissolved oxygen within the sludge/wastewater mixture is significantly reduced.

After passing the degassing zone 30 the sludge/wastewater mixture, now exhibiting a content of dissolved oxygen which is between 0,3 and 0,8 mg/l enters the vortex zone 34 in a directed descending flow 46. Upon reaching the recirculation path 44 the directed flow 46 is separated into two portions 48 and 50.

The first portion 48 of the flow 46 is deflected at the slanted surface of the conically shaped bottom 17 of the clarification chamber 16 and is therefore directed upwardly. By means of this ascending flow 48 the particles of the activated sludge are pseudo suspended in the wastewater. Within the pseudo suspension the contact area between the particles of the activated sludge and the wastewater is maximized. As a result the pseudo suspension provides ideal conditions for the interaction between the bacteria within the activated sludge and the pollutants present in the wastewater. Since the concentration of dissolved oxygen within the sludge/wastewater mixture does not exceed 0,8 mg/l, an effective denitrification of nitrites and nitrates to form molecular nitrogen occurs in the vortex zone 34. The oxygen bonded to the nitrites and nitrates is consumed by heterotropic bacteria decomposing residual organic compounds still present in the wastewater. To ensure the effectiveness of the treatment the concentration of activated sludge within the pseudo suspension is at least 4,0 g/l.

At the level of the second wall 36 a discernable interface 52 between the pseudo suspension of activated sludge and wastewater and clarified water is formed. The clarified water is removed from the clear water zone 32 through the clear water outlets 40 and the clear water collection pipe 42.

The second portion 50 of the flow 46 flows through the recirculation path 44 and back into the aeration chamber 14 where it is mixed with newly introduced wastewater and is repeatedly treated as described above. This continuous recirculation is accomplished without the use of additional means such as pumps or mixers. Since the recirculation path 44 is formed by a wide opening between the first wall 18 and the bottom 17 of the clarification chamber 16 and the air diffusers 22 are located near this opening, a settling of sludge in the recirculation path 44 can be avoided thus ensuring an unimpeded, continuous recirculation between the vortex zone 34 and the aeration chamber 14. This continuous recirculation together with a controlled removal of clear water ensures the stability of the hydraulic conditions within the system and the stability of the pseudo suspension even with fluctuating amounts of wastewater which have to be treated.

Excess sludge is uniformly removed from the aeration chamber 14 through channel 24 by an air-lift pump. The amount of excess sludge produced depends on several parameters such as contact conditions between the particles of the sludge and the wastewater, temperature, oxygen concentration, etc. but is mainly determinated by the sludge loading and, thus by the loading of the wastewater. A high sludge loading leads to a high growth rate of the bacteria and, thus to the production of large amounts of excess sludge. According to the invention the sludge loading is less than 0,2 g BOD₅ per gram of activated sludge and per day. The production of excess sludge was found to be 0,25-0,35 g of sludge per g of BOD₅ removed. As a result it is not required to remove large amounts of sludge from the tank 12. The retention time of the activated sludge within the tank 12 is at least ten days. Within these ten days not only the rapidly reproducing heterotropic bacteria but also the slowly reproducing autotropic bacteria, which are required to remove nitrogen containing pollutants from the wastewater, may develop appropriately.

To remove phosphorous from the wastewater a solution containing an aluminum compound is added to the sludge/wastewater mixture. Said solution contains 0,9 to 1,5 mg of net aluminum in the from of Al₂O₃ per mg of phosphorous to be removed and is added to the untreated wastewater before the wastewater is introduced into the aeration chamber 14. The aluminum containing solution acts as a flocculator causing a coagulation of the particles of the activated sludge to form flocks. As a result the value of the sludge volume index of the activated sludge is reduced. The required dosage of the aluminum containing solution is surprisingly low. This can be attributed to the maximization of the contact area between the reagent bonded to the surface of the flocks of the activated sludge and the phosphorous pollutants within the pseudo suspension of sludge and wastewater.

The wastewater treated as described above exhibits the following properties: less than 8,0 mg of BOD₅ per liter, less than 1,0 mg of nitrogen in the form of ammoniac per liter, 1,0 mg of nitrogen in the form of nitrate per liter, less than 8,0 mg of suspended solids per liter and less than 0,8 mg of net phosphorous in the form of P₂O₅.

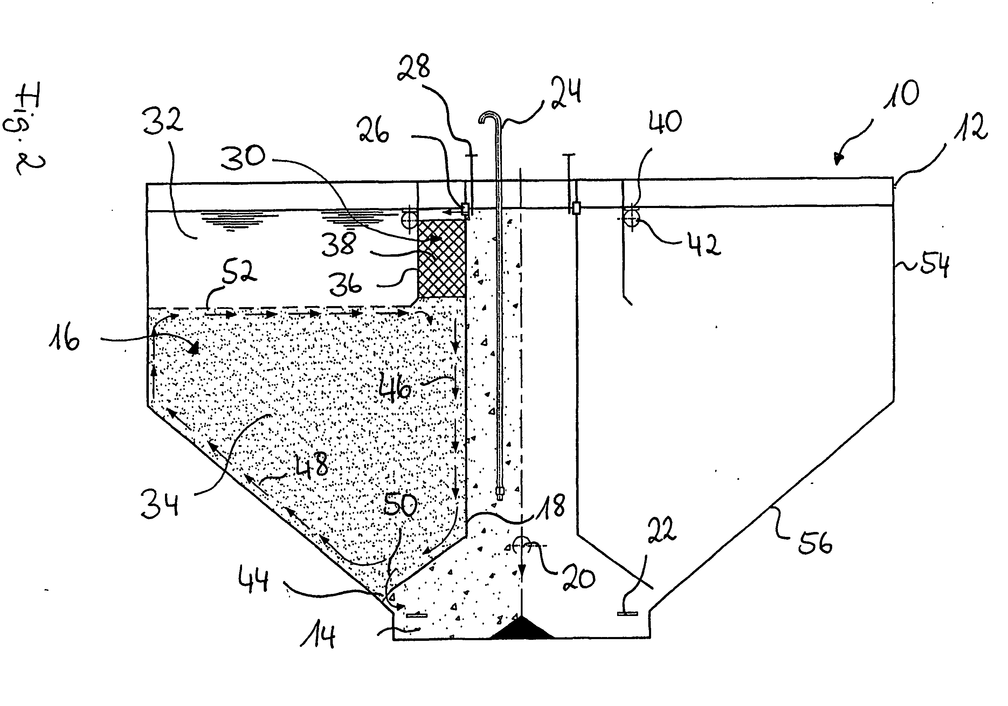

The components shown in Figs. 2 to 6 which, compared to Fig. 1 are of equal design or of equal effect are assigned identical reference numbers and are not explained again.

Fig. 2 shows another embodiment of the apparatus according to the invention. The tank 12 has a cylindrical upper portion 54 and a conical lower portion 56 and includes an aeration chamber 14 disposed in the center of the tank and a clarification chamber 16 surrounding the aeration chamber 14. The first portion 48 of the directed flow 46 is deflected at the slanted wall of the lower portion 56 of the tank 12.

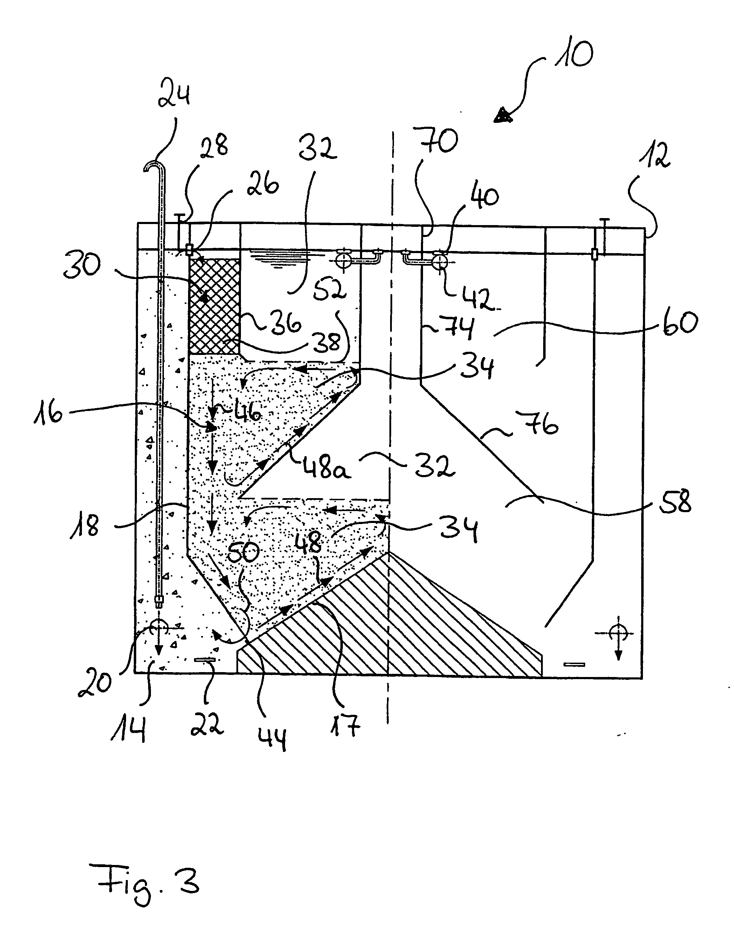

The embodiment of the apparatus according to Fig. 3 differs from the embodiment illustrated in Fig. 1 in that the clarification chamber 16 is divided by a dividing element 70 into two subchambers 58 and 60 each including a clear water zone 32 and a vortex zone 34. The clear water is removed from the dear water zones 32 through the clear water outlets 40 and 72, respectively, which are both connected to the clear water collection pipe 42. Since the clear water outlets are provided with flow regulating means, a uniform removal of clear water from both subchambers 58 and 60 can be achieved.

The dividing element 70 comprises a cylindrical upper portion 74 and a lower portion 76 including a slanted wall. The slanted wall of the lower portion 76 forms an angle of 135° to 150° in regard to the cylindrical upper portion 74. While in the lower subchamber 58 the portion 48 of the flow 46 is deflected at the conically shaped bottom 17 of the clarification chamber 16, in the upper subchamber 60 the portion 48a is deflected at the slanted wall of the lower portion 76 of the dividing element 70. Through the cylindrically shaped upper portion 74 of the dividing element 70 gases resulting from the interaction of the microorganisms with the pollutants within the wastewater can be removed from the lower subchamber 58. Furthermore, the shape of the dividing element 70 allows to access the lower subchamber 58 for cleaning purposes.

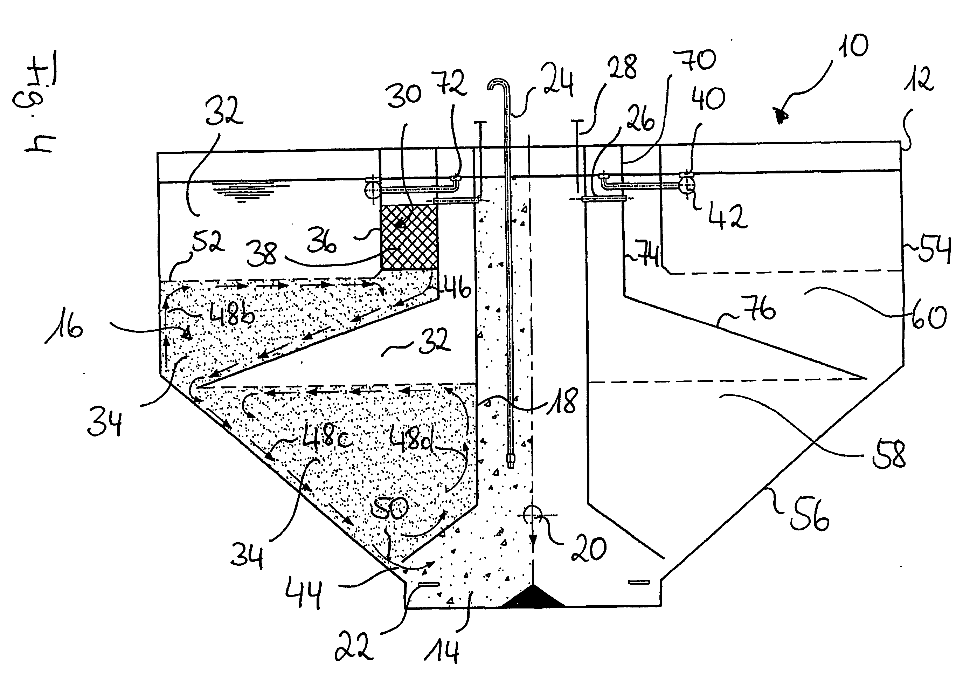

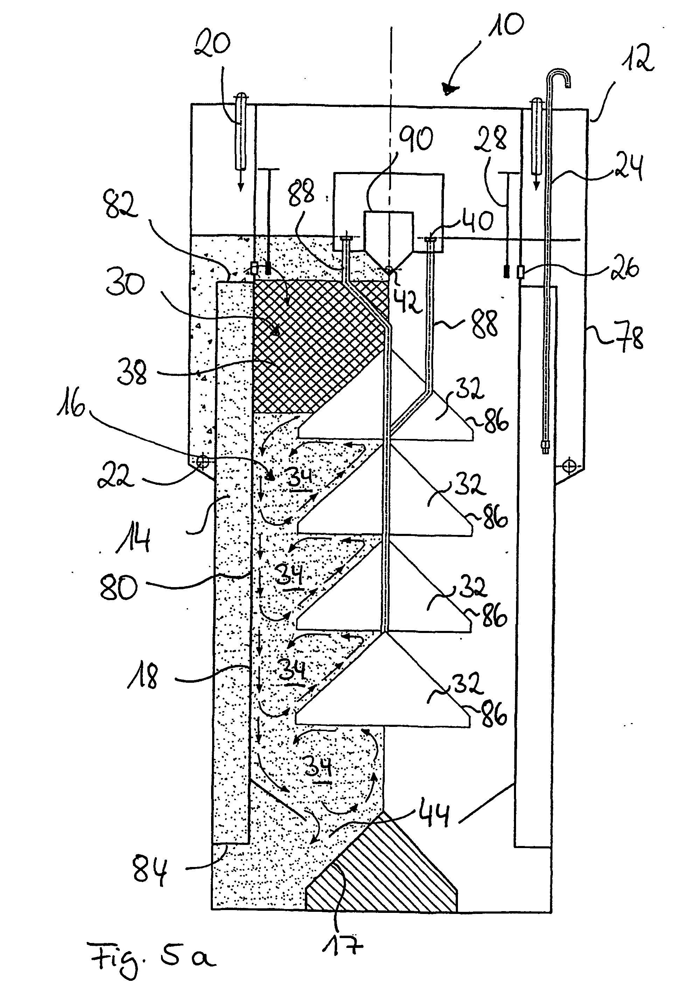

The embodiment illustrated in Fig. 4 differs from the embodiment according to Fig. 2 in that the clarification chamber 16 is divided into two subchambers 58 and 60 by a dividing element 70 comprising a cylindrical upper portion 74 and a lower portion 76 including a slanted wall. The descending flow 46 emitting from the degassing zone 30 flows along the slanted wall of the lower portion 76 of the dividing element 70. At the edge of the wall it is separated into two portions 48b and 48c. The portion 48b is deflected to form an ascending flow within the upper subchamber 60, while the portion 48c enters the lower subchamber 58 flowing along the slanted outer wall of the lower portion 56 of the tank 12. At the bottom of the lower subchamber 58 a portion 50 of the flow 48c recirculates into the aeration chamber 14 while a portion 48d forms an ascending flow within the lower subchamber 58. Further characteristics, properties and advantages of an apparatus with a clarification chamber 16 divided into subchambers 58 and 60 by a dividing element 70 have already been mentioned in the description of Fig. 3.

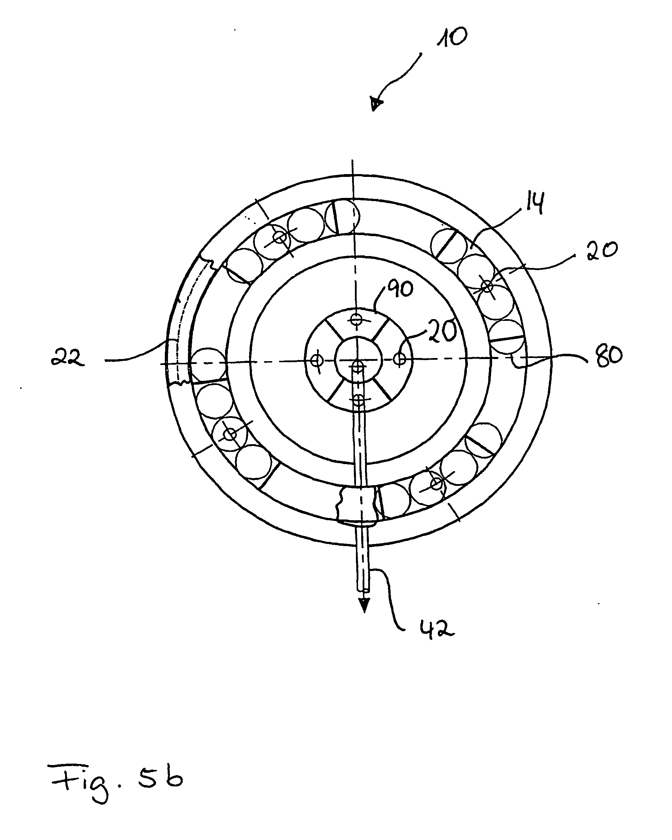

Another preferred embodiment of the apparatus according to the invention is shown in Figs. 5a and 5b. The cylindrical tank 12 includes an aeration chamber 14 and a clarification chamber 16. The wastewater inlets 20 are disposed above the aeration chamber 14. The air diffusers 22 are disposed in an upper portion 78 of the aeration chamber 14 being enlarged in regard to the remainder of the aeration chamber 14. Disposing the air diffusers 22 in an upper portion 78 of the aeration chamber 14 allows to obtain the required content of dissolved oxygen within the aeration chamber 14 without the use of high pressure air compressors. As a result the running costs of the bioreactor are significantly decreased. Within the upper portion 78 of the aeration chamber 14 intensive mixing and aerating of the sludge/wastewater mixture is accomplished. Below the air diffusers 22 the mixing and aerating is less intensive. To nevertheless achieve the desired mixing and aerating intensity, vertical recirculation pipes 80 are disposed within the aeration chamber 14. In the upper portion 78 of the aeration chamber 14 an ascending flow is formed entering the recirculation pipes 80 at their upper end 82. Within the recirculation pipes 80 the sludge/wastewater mixture flows downwards. When the mixture exits the recirculation pipes 80 at their lower end 84 an ascending flow in the direction of the upper portion 78 of the aeration chamber 14 is generated, due to the lower density of the aerated mixture. As a result a continuous recirculation along the entire height of the aeration chamber 14 is formed and thus intensive mixing and aerating can be achieved regardless of the position of the air diffusers 22. The clarification chamber 16 is divided into four subchambers 85 each including a clear water zone and a vortex zone by four conically shaped dividing elements 86. The clarified wastewater is removed from the clear water zones 32 through a system of clear water pipes 88 and clear water outlets 40 into a receptacle 90 connected with the clear water collection pipe 42.

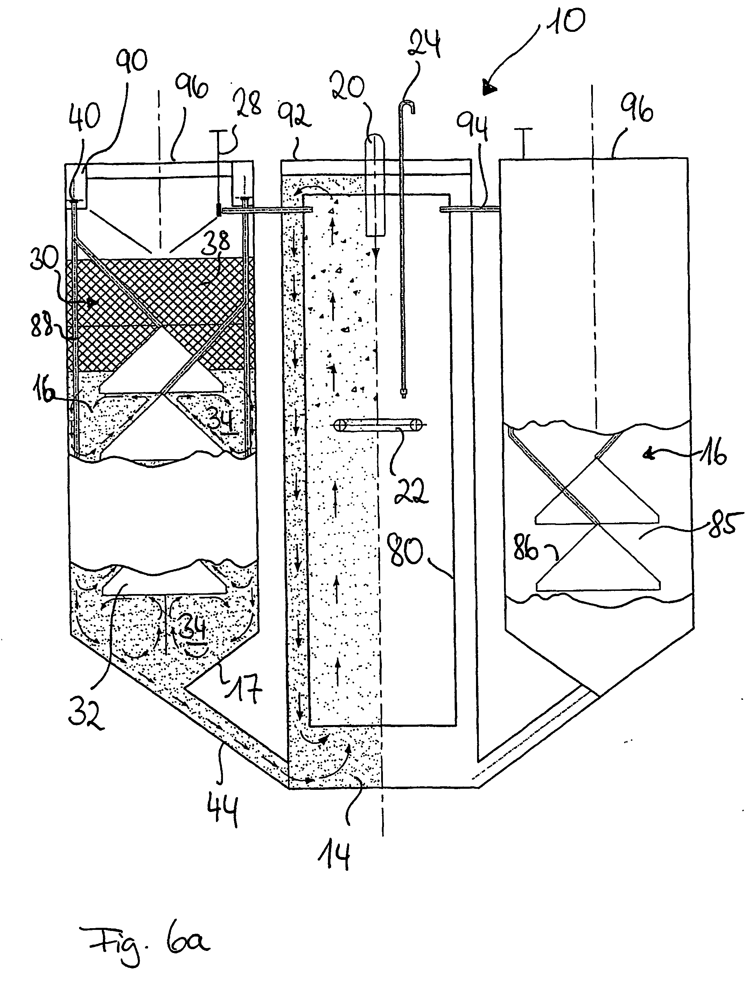

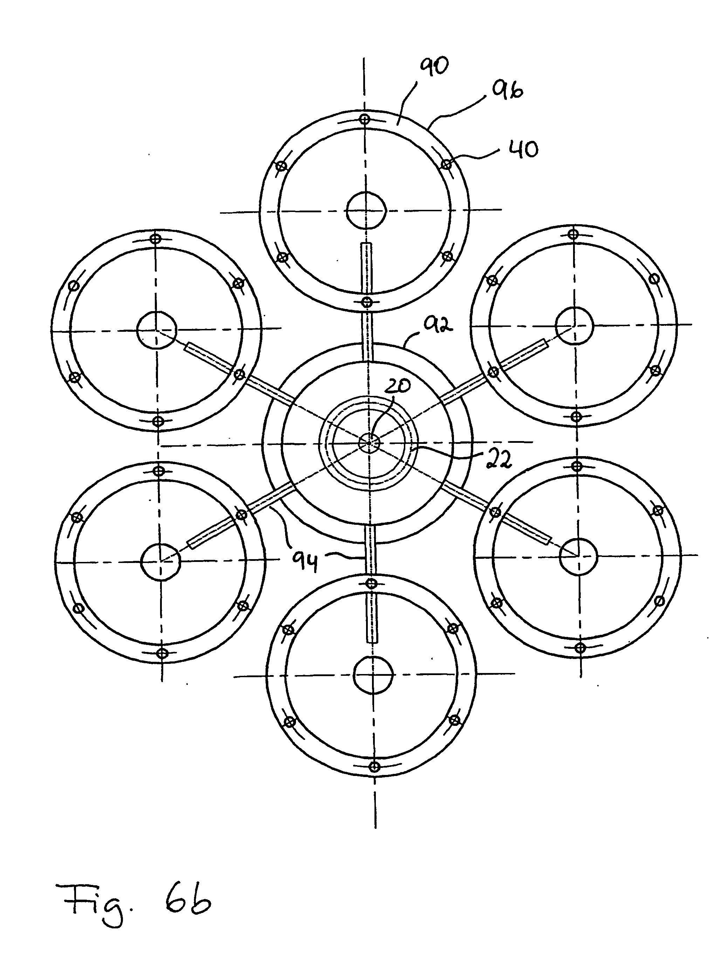

Still another embodiment of the apparatus according to the present invention is illustrated in Figs. 6a and 6b. The aeration chamber 14 is disposed within a first tank 92 including air diffusers 22 disposed in the middle of the aeration chamber 14, a wastewater inlet 20 and a vertical recirculation pipe 80.
The aeration chamber is connected with the degassing zone 30 of six clarification chambers 16 by a system of connecting channels 94. The clarification chambers 16 are disposed within six separated tanks 96, which are disposed around the first tank 92 including the aeration chamber 14. Within the degassing zone 30 of each clarification chamber 16 an insert 98 having the shape of a funnel is disposed above the non-reactive fibrous grid 38.
The dear water is removed from a plurality of clear water zones 32 provided within a plurality of clarification subchambers 85 through clear water pipes 88. The dear water pipes 88 are connected with receptacles 90 having the shape of circular rings and which are disposed at the upper periphery of the tanks 96. At the bottom of the tanks 96 recirculation channels 44 are disposed to connect a vortex zone 34 within the clarification chambers 16 with the aeration chamber 14.

## Claims

1. Method for biological wastewater treatment, in particular for the removal of organic and phosphorous pollutants as well as nitrogen containing compounds from wastewater, by micro-organisms within an activated sludge, comprising the steps of
- mixing the activated sludge with wastewater and aerating the mixture in an aeration zone (14),
- significantly reducing the amount of dissolved oxygen present in the mixture after aeration by microorganisms decomposing organic pollutants and nitrificating nitrogen containing pollutants within a degassing zone (30),
- cultivating microorganisms in addition to those which are already present in the mixture, on the surface of a non-reactive carrier medium (38) within the degassing zone (30),
- passing the mixture from the degassing zone (30) into at least one denitrification vortex zone (34),
- keeping the particles of activated sludge contained in the vortex zone (34) colloidally suspended by means of a vortex, swirl or eddy kind of movement producing a vortex action,
- forming a directed recirculating flow between the vortex zone (34) containing colloidally suspended activated sludge and the aeration zone (14), and
- separating the treated wastewater from the sludge.

2. Method according to claim 1,
**characterized in that** said non-reactive carrier medium (38) is a synthetic fibrous grid, in particular consisting of a polyamide.

3. Method according to any of the preceding claims,
**characterized in that** the concentration of colloidally suspended activated sludge is at least 4,0 g/l.

4. Method according to any of the preceding claims,
**characterized in that** the sludge loading is less than 0,2 g BOD₅ per g of activated sludge and per day.

5. Method according to any of the preceding claims,
**characterized in that** the production of excess sludge is less than 0,35 g of sludge per g BOD₅ removed.

6. Method according to any of the preceding claims,
**characterized in that** the retention time of the activated sludge in the mixture is at least 10 days.

7. Method according to any of the preceding claims,
**characterized in that** the concentration of dissolved oxygen in the aeration zone (14) is at least 3,0 mg/l.

8. Method according to any of the preceding claims,
**characterized in** adding an aluminum compound to the activated sludge/wastewater-mixture.

9. Method according to claim 8,
**characterized in that** the aluminum compound is a solution containing 0,9-1,5 mg of net aluminum per mg of phosporous to be removed from the wastewater.

10. Apparatus for biological wastewater treatment, in particular the removal of organic and phosphorous pollutants as well as nitrogen containing compounds from wastewater, by micro-organisms within an activated sludge, comprising
- at least one inlet (20) for the wastewater
- an aeration chamber (14) comprising at least one air-diffuser (22),
- at least one first wall (18) separating the aeration chamber (14) from at least one clarification chamber (16), wherein
- the at least one clarification chamber (16) includes a degassing zone (30) comprising a non-reactive carrier medium (38) for cultivating additional microorganisms, at least one denitrification vortex zone (34) separated from the degassing zone (30) in which there is a vortex, swirl or eddy kind of movement producing a vortex action to keep the particles of the activated sludge contained in the denitrification vortex zone (34) colloidally suspended, and at least one clear water zone (32), each clear water zone (32) comprising at least one outlet (40) for clarified water,
- a channel (26) connecting the aeration chamber (14) and the degassing zone (30) of the at least one clarification chamber (16), and
- a recirculation conncection (44) between the denitrification vortex zone (34) of the at least one clarification chamber (16) and the aeration chamber (14).

11. Apparatus according to claim 10,
**characterized in that** the bottom of the aeration chamber (14) is disposed beneath the bottom of the clarification chamber (16).

12. Apparatus according to claim 10 or 11,
**characterized in that** a channel (24) for the removal of excess sludge is arranged within the aeration chamber (14) and a pumping means, in particular an air-lift pump, removes the excess sludge from the aeration chamber (14).

13. Apparatus according to one of claims 10 to 12,
**characterized in that** the recirculation connection (44) between the denitrification vortex zone (34) and the aeration chamber (14) is formed by an opening between the first wall (18) and the bottom of the clarification chamber (16) and that the air diffusers (22) within the aeration chamber (14) are located near this opening.

14. Apparatus according to one of claims 10 to 13,
**characterized in that** the clarification chamber (16) includes subchambers (85), each subchamber (85) comprising a clear water zone (32) having at least one outlet (40) for clarified water and a denitrification vortex zone (34).

15. Apparatus according to daim 14,
**characterized in that** the clarification chamber (16) includes two subchambers (58, 60) formed by a dividing element (70) comprising a slanted wall disposed at the lower end of a vertical wall and forming an angle of 135° to 150° in regard to said vertical wall.

16. Apparatus according to claim 14,
**characterized in that** the clarification chamber (16) includes at least two subchambers (85), each subchamber (85) formed by a slanted wall (86), in particular of conical shape.

17. Apparatus according to one of the claims 10 to 12 and 14 to 16,
**characterized in that** the air diffusers (22) are disposed in an upper portion (78) of the aeration chamber (14), the cross-section of said upper portion (78) of the aeration chamber (14) being enlarged in regard to the remainder of the aeration chamber (14).

18. Apparatus according to one of claims 10 to 17,
**characterized in that** at least one vertical recirculation pipe (80) is arranged within the aeration chamber (14) so as to form a recirculating flow within the aeration chamber (14).

19. Apparatus according to one of the claims 10 to 12 and 14 to 18,
**characterized in that** the aeration chamber (14) is arranged within a first tank (92), said aeration chamber (14) is connected with the degassing zones (30) of a plurality of clarification chambers (16) arranged within a plurality of tanks (96) by a system of connecting channels (94) and said aeration chamber (14) is connected with one denitrification vortex zone (34) within each clarification chamber (16) by a system of recirculation connections (44).

## Patentansprüche

1. Verfahren zur biologischen Abwasserbehandlung, insbesondere zur Entfernung von organischen und phosphorhaltigen Schadstoffen sowie von stickstoffhaltigen Verbindungen aus Abwasser durch Mikroorganismen in einem aktivierten Schlamm, mit den Schritten:
- Mischen des aktivierten Schlamms mit Abwasser und Belüften der Mischung in einer Belüftungszone (14),
- beträchtliches Verringern der nach dem Belüften in der Mischung vorhandenen Menge an gelöstem Sauerstoff durch Mikroorganismen, die in einer Entgasungszone (30) organische Schadstoffe zersetzen und stickstoffhaltige Schadstoffe nitrifizieren,
- Kultivieren von Mikroorganismen zusätzlich zu denjenigen, die bereits in der Mischung vorhanden sind, auf der Oberfläche eines nicht reaktiven Trägermediums (38) in der Entgasungszone (30),
- Leiten der Mischung aus der Entgasungszone (30) in mindestens eine Denitrifikations-Wirbelzone (34),
- kolloidal suspendiert Halten der Partikel des in der Wirbelzone (34) enthaltenen aktivierten Schlamms durch eine wirbel-, strudel- oder wirbelströmungsartige Bewegung, die eine Wirbelwirkung erzeugt,
- Ausbilden einer gerichteten Rezirkulationsströmung zwischen der den kolloidal suspendierten aktivierten Schlamm enthaltenden Wirbelzone (34) und der Belüftungszone (14), und
- Trennen des behandelten Abwassers von dem Schlamm.

2. Verfahren nach Anspruch 1,
**dadurch gekennzeichnet, dass** das nicht reaktive Trägermedium (38) ein Gitter aus synthetischen Fasern ist, das insbesondere aus einem Polyamid besteht.

3. Verfahren nach einem der vorhergehenden Ansprüche,
**dadurch gekennzeichnet, dass** die Konzentration an kolloidal suspendiertem aktivierten Schlamm mindestens 4,0 g/l beträgt.

4. Verfahren nach einem der vorhergehenden Ansprüche,
**dadurch gekennzeichnet, dass** die Schlammbeladung geringer ist als 0,2 g BOD₅ pro Gramm an aktiviertem Schlamm und pro Tag.

5. Verfahren nach einem der vorhergehenden Ansprüche,
**dadurch gekennzeichnet, dass** die Produktion an überschüssigem Schlamm geringer ist als 0,35 g Schlamm pro Gramm entferntem BOD₅.

6. Verfahren nach einem der vorhergehenden Ansprüche,
**dadurch gekennzeichnet, dass** die Verweilzeit des aktivierten Schlamms in der Mischung mindestens zehn Tage beträgt.

7. Verfahren nach einem der vorhergehenden Ansprüche,
**dadurch gekennzeichnet, dass** die Konzentration an gelöstem Sauerstoff in der Belüftungszone (14) mindestens 3,0 mg/l beträgt.

8. Verfahren nach einem der vorhergehenden Ansprüche, **gekennzeichnet durch** Zuführen einer Aluminiumverbindung zu der Mischung aus aktiviertem Schlamm und Abwasser.

9. Verfahren nach Anspruch 8,
**dadurch gekennzeichnet, dass** die Aluminiumverbindung eine Lösung ist, die 0,9 bis 1,5 mg reines Aluminium pro mg an aus dem Abwasser zu entfernendem Phosphor enthält.

10. Vorrichtung zur biologischen Abwasserbehandlung, insbesondere zur Entfernung von organischen und phosphorhaltigen Schadstoffen sowie von stickstoffhaltigen Verbindungen aus Abwasser durch Mikroorganismen in einem aktivierten Schlamm, mit:
- mindestens einem Einlass (20) für das Abwasser,
- einer Belüftungskammer (14), die mindestens einen Luftverdüser (22) umfasst,
- mindestens einer ersten Wand (18), die die Belüftungskammer (14) von mindestens einer Klärkammer (16) trennt, wobei
- die mindestens eine Klärkammer (16) eine Entgasungszone (30) mit einem nicht reaktiven Trägermedium (38) zum Kultivieren von zusätzlichen Mikroorganismen, mindestens eine von der Entgasungszone (30) getrennte Denitrifikations-Wirbelzone (34), in der eine wirbel-, strudel- oder wirbelströmungsartige Bewegung vorherrscht, die eine Wirbelwirkung erzeugt, um die Partikel des in der Denitrifikations-Wirbelzone (34) enthaltenen aktivierten Schlamms kolloidal suspendiert zu halten, und mindestens eine Klarwasserzone (32) umfasst, wobei jede Klarwasserzone (32) mindestens einen Auslass (40) für geklärtes Wasser umfasst,
- einem Kanal (36), der die Belüftungskammer (14) und die Entgasungszone (30) der mindestens einen Klärkammer (16) verbindet, und
- einer Rezirkulationsverbindung (44) zwischen der Denitrifikations-Wirbelzone (34) der mindestens einen Klärkammer (16) und der Belüftungskammer (14).

11. Vorrichtung nach Anspruch 10,
**dadurch gekennzeichnet, dass** der Boden der Belüftungskammer (14) unterhalb des Bodens der Klärkammer (16) angeordnet ist.

12. Vorrichtung nach Anspruch 10 oder 11,
**dadurch gekennzeichnet, dass** ein Kanal (14) zur Entfernung überschüssigen Schlamms in der Belüftungskammer (14) angeordnet ist und eine Pumpeinrichtung, insbesondere eine Luftpumpe, den überschüssigen Schlamm aus der Belüftungskammer (14) entfernt.

13. Vorrichtung nach einem der Ansprüche 10 bis 12,
**dadurch gekennzeichnet, dass** die Rezirkulationsverbindung (44) zwischen der Denitrifikations-Wirbelzone (34) und der Belüftungskammer (14) durch eine Öffnung zwischen der ersten Wand (18) und dem Boden der Klärkammer (16) gebildet ist, und dass die Luftverdüser (22) in der Belüftungskammer (14) nahe dieser Öffnung angeordnet sind.

14. Vorrichtung nach einem der Ansprüche 10 bis 13,
**dadurch gekennzeichnet, dass** die Klärkammer (16) Unterkammern (85) umfasst, wobei jede Unterkammer (85) eine Klarwasserzone (32) mit mindestens einem Auslass (40) für geklärtes Wasser und eine Denitrifikations-Wirbelzone (34) umfasst.

15. Vorrichtung nach Anspruch 14,
**dadurch gekennzeichnet, dass** die Klärkammer (16) zwei Unterkammern (58, 60) umfasst, welche durch ein Trennelement (70) gebildet sind, das eine schräge Wand umfasst, die am unteren Ende einer vertikalen Wand angeordnet ist und einen Winkel von 135° bis 150° bezüglich der vertikalen Wand bildet.

16. Vorrichtung nach Anspruch 14,
**dadurch gekennzeichnet, dass** die Klärkammer (16) mindestens zwei Unterkammern (85) umfasst, wobei jede Unterkammer (85) durch eine schräge Wand (86) gebildet ist, die insbesondere eine konische Form aufweist.

17. Vorrichtung nach einem der Ansprüche 10 bis 12 und 14 bis 16,
**dadurch gekennzeichnet, dass** die Luftverdüser (22) in einem oberen Abschnitt (78) der Belüftungskammer (14) angeordnet sind, wobei der Querschnitt des oberen Abschnitts (78) der Belüftungskammer (14) bezüglich des Rests der Belüftungskammer (14) vergrößert ist.

18. Vorrichtung nach einem der Ansprüche 10 bis 17,
**dadurch gekennzeichnet, dass** mindestens eine vertikale Rezirkulationsleitung (80) in der Belüftungskammer (14) angeordnet ist, um eine Rezirkulationsströmung in der Belüftungsklammer (14) auszubilden.

19. Vorrichtung nach einem der Ansprüche 10 bis 12 und 14 bis 18,
**dadurch gekennzeichnet, dass** die Belüftungskammer (14) in einem ersten Behälter (92) angeordnet ist, wobei die Belüftungskammer (14) durch ein System von Verbindungskanälen (94) mit den Entgasungszonen (30) einer Mehrzahl von Klärkammern (16) verbunden ist, die in einer Mehrzahl von Behältern (96) angeordnet sind, und die Belüftungskammer (14) durch ein System von Rezirkulationsverbindungen (44) mit einer Denitrifikations-Wirbelzone (34) in einer jeden Klärkammer (16) verbunden ist.

## Revendications

1. Procédé destiné au traitement biologique des eaux usées, en particulier pour l'enlèvement des polluants organiques et des polluants contenant du phosphore de même que des composés contenant de l'azote à partir des eaux usées, par des micro-organismes dans des boues activées, comprenant les étapes de
- mélanger les boues activées avec les eaux usées et aérer le mélange dans une zone d'aération (14),
- réduire significativement la quantité d'oxygène dissous présent dans le mélange après aération par des micro-organismes décomposant les polluants organiques et nitrifiant les polluants contenant de l'azote dans une zone de dégazage (30),
- cultiver des micro-organismes en plus de ceux qui sont déjà présents dans le mélange, sur la surface d'un milieu véhicule non réactif (38) dans la zone de dégazage (30),
- faire passer le mélange de la zone de dégazage (30) dans au moins une zone de tourbillon de dénitrification (34),
- maintenir les particules des boues activées contenues dans la zone de tourbillon (34) en suspension colloïdale au moyen d'un genre de mouvement de tourbillon, de turbulence ou de remous produisant une action de tourbillon,
- former un courant de recirculation dirigé entre la zone de tourbillon (34) contenant les boues activées en suspension colloïdale et la zone d'aération (14), et
- séparer les eaux usées traitées des boues.

2. Procédé selon la revendication 1,
**caractérisé en ce que** le milieu véhicule non réactif (38) est une grille fibreuse synthétique, en particulier consistant en un polyamide.

3. Procédé selon l'une quelconque des revendications précédentes,
**caractérisé en ce que** la concentration en boues activées en suspension colloïdale est d'au moins 4,0 g/l.

4. Procédé selon l'une quelconque des revendications précédentes,
**caractérisé en ce que** la charge en boues est inférieure à 0,2 g de DBO₅ par gramme de boues activées et par jour.

5. Procédé selon l'une quelconque des revendications précédentes,
**caractérisé en ce que** la production de boues en excès est inférieure à 0,35 g de boues par gramme de DBO₅ enlevée.

6. Procédé selon l'une quelconque des revendications précédentes,
**caractérisé en ce que** le temps de rétention des boues activées dans le mélange est d'au moins 10 jours.

7. Procédé selon l'une quelconque des revendications précédentes,
**caractérisé en ce que** la concentration en oxygène dissous dans la zone d'aération (14) est d'au moins 3,0 mg/l.

8. Procédé selon l'une quelconque des revendications précédentes,
**caractérisé en** ajoutant un composé aluminium au mélange boues activées/eaux usées.

9. Procédé selon la revendication 8,
**caractérisé en ce que** le composé aluminium est une solution contenant de 0,9 à 1,5 mg d'aluminium net par mg de phosphore à enlever des eaux usées.

10. Dispositif destiné au traitement biologique des eaux usées, en particulier pour l'enlèvement des polluants organiques et des polluants contenant du phosphore de même que des composés contenant de l'azote à partir des eaux usées, par des micro-organismes dans des boues activées, comprenant
- au moins une entrée (20) pour les eaux usées
- une chambre d'aération (14) comprenant au moins un diffuseur d'air (22)
- au moins une première paroi (18) séparant la chambre d'aération (14) d'au moins une chambre de clarification (16) dans laquelle
- l'au moins une chambre de clarification (16) inclut une zone de dégazage (30) comprenant un milieu véhicule non réactif (38) pour cultiver des micro-organismes supplémentaires, au moins une zone de tourbillon de dénitrification (34), séparée de la zone de dégazage (30) dans laquelle il y a un genre de mouvement de tourbillon, de turbulence ou de remous produisant une action de tourbillon pour maintenir les particules des boues activées contenues dans la zone de tourbillon de dénitrification (34) en suspension colloïdale, et au moins une zone d'eau claire (32), chaque zone d'eau claire (32) comprenant au moins une sortie (40) pour l'eau clarifiée,
- un canal (26) reliant la chambre d'aération (14) et la zone de dégazage (30) d'au moins une chambre de clarification (16), et
- un connexion de recirculation (44) entre la zone de tourbillon de dénitrification (34) de l'au moins une chambre de clarification (16) et la chambre d'aération (14).

11. Dispositif selon la revendication 10,
**caractérisé en ce que** le fond de la chambre d'aération (14) est disposé sous le fond de la chambre de clarification (16).

12. Dispositif selon la revendication 10 ou 11,
**caractérisé en ce qu'**un canal (24) pour l'enlèvement des boues en excès est arrangé dans la chambre d'aération (14) et un moyen de pompage, en particulier une pompe à air comprimé, évacue les boues en excès de la chambre d'aération (14).

13. Dispositif selon l'une des revendications 10 à 12,
**caractérisé en ce que** la connexion de recirculation (44) entre la zone de tourbillon de dénitrification (34) et la chambre d'aération (14) est formée par une ouverture entre la première paroi (18) et le fond de la chambre de clarification (16) et **en ce que** les diffuseurs d'air (22) dans la chambre d'aération (14) sont situés à côté de cette ouverture.

14. Dispositif selon l'une des revendications 10 à 13,
**caractérisé en ce que** la chambre de clarification (16) inclut des sous-chambres (85), chaque sous-chambre (85) comprenant une zone d'eau claire (32) ayant au moins une sortie (40) pour l'eau clarifiée et une zone de tourbillon de dénitrification (34).

15. Dispositif selon la revendication 14,
**caractérisé en ce que** la chambre de clarification (16) inclut deux sous-chambres (58, 60) formées par un élément de division (70) comprenant une paroi inclinée disposée à l'extrémité inférieure d'une paroi verticale et formant un angle de 135° à 150° par rapport à ladite paroi verticale.

16. Dispositif selon la revendication 14,
**caractérisé en ce que** la chambre de clarification (16) inclut au moins deux sous-chambres (85), chaque sous-chambre (85) formée par une paroi inclinée (86) en particulier de forme conique.

17. Dispositif selon l'une des revendications 10 à 12 et 14 à 16,
**caractérisé en ce que** les diffuseurs d'air (22) sont disposés dans une partie supérieure (78) de la chambre d'aération (14), la section transversale de ladite partie supérieurs (78) de la chambre d'aération (14) étant élargie par rapport au reste de la chambre d'aération (14).

18. Dispositif selon l'une des revendications 10 à 17,
**caractérisé en ce qu'**au moins un tuyau vertical de recirculation (80) est arrangé dans la chambre d'aération (14) afin de former un courant de recirculation dans la chambre d'aération (14).

19. Dispositif selon l'une des revendications 10 à 12 et 14 à 18,
**caractérisé en ce que** la chambre d'aération (14) est arrangée à l'intérieur d'une première cuve (92), ladite chambre d'aération (14) est reliée avec les zones de dégazage (30) d'une pluralité de chambres de clarification (16) arrangées à l'intérieur d'une pluralité de cuves (96) par un système de canaux de connexion (94) et ladite chambre d'aération (14) est reliée à une zone de tourbillon de dénitrification (34) à l'intérieur de chaque chambre de clarification (16) par un système de connexion de recirculation (44).
